Europäisches Patentamt

European Patent Office

Office européen des brevets

(19)

(11) Veröffentlichungsnummer : **0 439 039 B1**

(12) # EUROPÄISCHE PATENTSCHRIFT

(45) Veröffentlichungstag der Patentschrift :
**16.08.95 Patentblatt 95/33**

(51) Int. Cl.$^6$ : **H04N 9/44, H04N 9/64**

(21) Anmeldenummer : **91100357.2**

(22) Anmeldetag : **14.01.91**

(54) Verfahren zur Verarbeitung eines PAL-Farbfernsehsignals.

(30) Priorität : **24.01.90 DE 4001930**

(43) Veröffentlichungstag der Anmeldung :
**31.07.91 Patentblatt 91/31**

(45) Bekanntmachung des Hinweises auf die
Patenterteilung :
**16.08.95 Patentblatt 95/33**

(84) Benannte Vertragsstaaten :
**AT DE ES FR GB IT**

(56) Entgegenhaltungen :
**DE-A- 2 520 451**
**DE-A- 3 517 697**

(73) Patentinhaber : **BTS BROADCAST**
**TELEVISION SYSTEMS GMBH**
**Postfach 11 02 61,**
**Robert-Bosch-Strasse 7**
**D-64293 Darmstadt (DE)**

(72) Erfinder : **Heitmann, Jürgen, Dipl.-Ing.**
**Ernst-Pasque-Strasse 35**
**W-6146 Alsbach-Hähnlein (DE)**
Erfinder : **Fischer, Dieter, Dipl.-Ing.**
**Im Rosengarten 4**
**W-6109 Mühltal (DE)**

(74) Vertreter : **von Laue, Hanns-Ulrich, Dipl.-Ing.**
**Philips Patentverwaltung GmbH**
**Wendenstrasse 35c**
**D-20097 Hamburg (DE)**

**Beschreibung**

Die Erfindung geht aus von einem Verfahren zur Verarbeitung eines PAL-Farbfernsehsignals, bei welchem die V-Komponente eines im PAL-Farbfernsehsignals enthaltenen Farbartsignals demoduliert wird. Ferner betrifft die Erfindung eine Vorrichtung zur Verarbeitung eines PAL-Farbfernsehsignals, enthaltend eine Einrichtung (6) zur Demodulation der V-Komponente eines im PAL-Farbfernsehsignals enthaltenen Farbartsignals.

Bei dem PAL-Farbfernsehverfahren wird dem Leuchtdichtesignal Y additiv ein Farbartsignal zugesetzt, welches aus trägerfrequenten Farbdifferenzsignalen U und V besteht. Die PAL-Farbträgerfrequenz $f_{sc}$ ist mit einem ungeradzahligen Vielfachen von einem Viertel der Zeilenfrequenz $f_H$ (Viertelzeilenoffset) verkoppelt und außerdem mit einem 25-Hz-Versatz versehen. Die Farbträgerfrequenz $f_{sc}$ genügt der Gleichung

$$f_{sc} = (4n - 1) * f_H/4 + 25 \text{ Hz},$$

wobei n = 284 ist. Auf eine Zeilenperiode entfallen somit etwa 283,75 Schwingungen der Farbträgerfrequenz $f_{sc}$. Für das PAL-Farbfernsehsignal gilt die Beziehung:

$$E(t) = Y(t) + U(t) * \cos\Omega_{sc}t - g(t) * V(t) * \sin\Omega_{sc}t.$$

Der Ausdruck g(t) steht für eine zeilensequentielle Vorzeichenumschaltung der V-Komponente.

Zur Decodierung der Farbinformation wird das von dem PAL-Farbfernsehsignal E(t) abgetrennte farbträgerfrequente Farbartsignal in einem sogenannten Laufzeitdemodulator zunächst in die beiden farbträgerfrequenten Farbdifferenzsignale U und V aufgespaltet, bevor durch eine nachfolgende Synchrondemodulation videofrequente Farbdifferenzsignale zurückgewonnen werden können. Die Signalaufspaltung erfolgt in dem Laufzeitdemodulator dadurch, daß in jeder Zeile die Summe und die Differenz zweier aufeinanderfolgender Zeilen mit den farbträgerfrequenten Farbartsignalen gebildet wird. Dabei findet eine Zeilenmittlung statt, die zu einer Verschlechterung der Farbbildwiedergabe führt.

In einem Fernsehstudiokomplex können einzelne PAL-Farbfernsehsignale durch kaskadiert angeordnete Signalverarbeitungsanlagen mehrfach codiert bzw. decodiert werden. Durch die damit verbundenen Mehrfach-Zeilenmittlungen wird die Farbbildqualität weiter verschlechtert.

Es erscheint naheliegend, anstelle eines Standard-PAL-Decoders mit Laufzeitdemodulator einen Simple-PAL-Decoder einzusetzen, um die durch die Zeilenmittlung verursachte Bildqualitätsverschlechterung zu verhindern. In diesem Fall können jedoch Farbtonfehler durch Phasenabweichungen zwischen dem Farbsynchronsignal und dem farbträgerfrequenten Farbartsignal die Bildwiedergabe derart verschlechtern, daß die letztendlich erhaltene Bildqualität für Fernsehteilnehmer unzumutbar ist.

Aus der DE-A- 35 17 697 ist ein Verfahren zur Wiedereinführung der exakten Phasenbeziehung eines Chrominanzsignals zu einem externen, vorgegebenen Referenzsignal bekannt, bei welchem entsprechend der Phasenabweichung des Chrominanzsignals eines Farbfernsehsignals vom externen Referenzträgersignal zwei Stellspannungen gewonnen werden, die jeweils für eine Zeilendauer festgehalten werden. Zwei in bezug auf die Farbträgerfrequenz um 90° gegeneinander phasenverschobene trägerfrequente Chrominanzsignale werden mit Hilfe der gewonnenen Stellspannungen so amplitudenbewertet und danach addiert, daß die Phasenlage des Chrominanzsignals derjenigen des externen Referenzsignals entspricht. Dieses bekannte Verfahren ist lediglich zur Phasenanpassung eines Chrominanzsignals, das nicht nach dem PAL-Standard codiert ist, an ein externes farbträgerfrequentes Referenzsignal geeignet. Die absolute Phasenlage zwischen dem farbträgerfrequenten Chrominanzsignal des Farbfernsehsignals und einem Farbsynchronsignal des Farbfernsehsignals bleibt unverändert.

Der vorliegenden Erfindung liegt die Aufgabe zugrunde, ein Verfahren und eine Vorrichtung zur Verarbeitung eines PAL-Farbfernsehsignals anzugeben, welches bzw. welche die Möglichkeit schafft, Phasenfehler zwischen einem Referenzsignal und dem Farbartsignal ohne Verwendung eines Standard-PAL-Decoders zu korrigieren.

Diese Aufgabe wird durch die in den kennzeichnenden Teilen der Patentansprüche 1 und 13 angegebenen Merkmale gelöst.

Die Erfindung mit den kennzeichnenden Merkmalen des Patentanspruchs 1 hat den Vorteil, daß durch eine Analyse der demodulierten und (simple-)geschalteten V-Komponente des PAL-Farbfernsehsignals ein Signal abgeleitet werden kann, welches zur Korrektur der Phasenlage zwischen dem Farbsynchronsignal und dem Farbartsignal herangezogen werden kann.

Durch die in den abhängigen Ansprüchen aufgeführten Maßnahmen sind vorteilhafte Weiterbildungen und Verbesserungen des im Patentanspruch 1 angegebenen Verfahrens möglich. Besonders vorteilhaft ist, daß das erfindungsgemäße Verfahren bzw. die erfindungsgemäße Vorrichtung auch zur Korrektur eines digital codierten, mit dem 4-fachen der Farbträgerfrequenz abgetasteten PAL-Farbfernsehsignals anwendbar bzw. benutzbar ist.

Ein Ausführungsbeispiel der Erfindung ist in der Zeichnung dargestellt und in der nachfolgenden Beschreibung näher erläutert. Es zeigen:

Fig. 1 ein Blockschaltbild zur Erläuterung des erfindungsgemäßen Verfahrens bei der digitalen Signalverarbeitung eines mit dem 4-fachen der Farbträgerfrequenz abgetasteten PAL-Farbfernsehsignals,

Fig. 2 Vektordiagramme der Winkellage zu bestimmten Abtastzeitpunkten des digitalen PAL-Farbfernsehsignals,

Fig. 3 eine tabellenartige Darstellung der Signalsequenz der Komponenten Y, U und V im digitalen PAL-Farbfernsehsignal und

Fig. 4 das Blockschaltbild eines digitalen Signalprozessors zur Ableitung eines Signals zur Korrektur von Phasenabweichungen zwischen dem Farbsynchronsignal und Farbartsignal des digitalen PAL-Farbfernsehsignals.

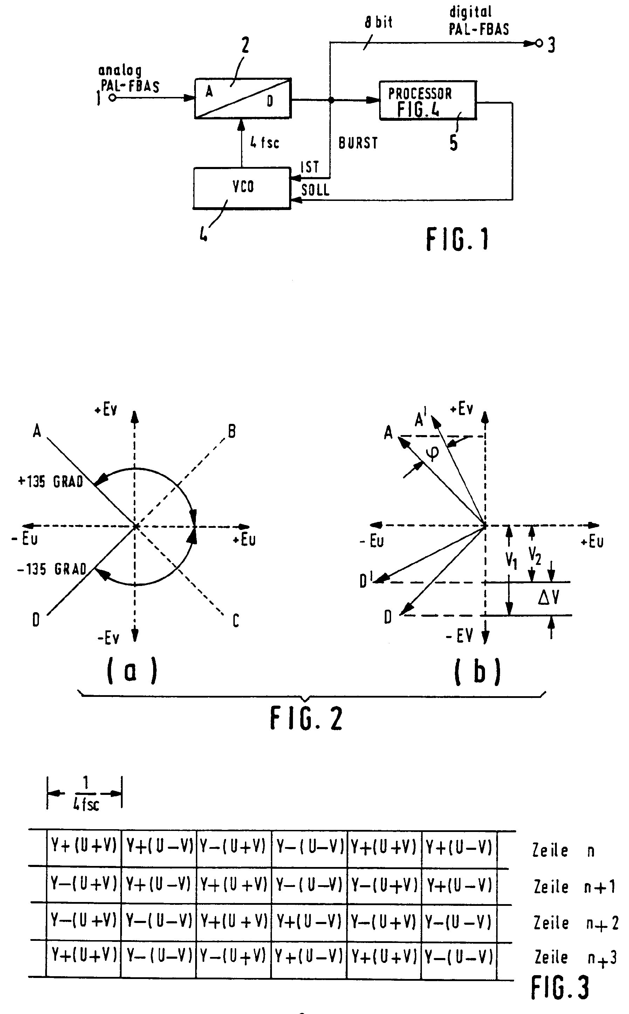

Das nachfolgende Ausführungsbeispiel beschreibt eine digitale Realisierung des erfindungsgemäßen Verfahrens. In dem Blockschaltbild der Fig. 1 wird bei 1 ein analoges PAL-Farbfernsehsignal einem A/D-Wandler 2 zugeführt. Das analoge PAL-Farbfernsehsignal wird mit einem 4-fachen der PAL-Farbträgerfrequenz $f_{sc}$ abgetastet, sodann quantisiert und codiert. An einem Ausgang 3 des A/D-Wandlers 2 ist ein digital codiertes PAL-Farbfernsehsignal in einer Wortbreite von 8 Bit abnehmbar. Das zur Abtastung des analogen PAL-Farbfernsehsignals benötigte Taktsignal $4f_{sc}$ wird von einem spannungsgesteuerten Oszillator 4 erzeugt. Der spannungsgesteuerte Oszillators 4 wird abhängig von der jeweiligen Phasenlage des Farbsynchronsignals im vom A/D-Wandler 2 abgegebenen digitalen PAL-Farbfernsehsignal phasenregelt.

In einem Vorschlag zur magnetischen Aufzeichnung eines geschlossen codierten PAL-Farbfernsehsignals (Format-D2) ist festgelegt, daß die Phase des Taktsignals $4f_{sc}$ mit der 135°-Phasenlage eines Farbsynchronsignals im PAL-Farbfernsehsignal übereinstimmen soll. Das Vektordiagramm in der Fig. 2(a) kennzeichnet diesen Zusammenhang. Zu einem Abtastzeitpunkt A des Taktsignals $4f_{sc}$ weist der Vektor eine Phasenablage von +135° zu einer Achse $E_u$ auf. Der folgende Abtastzeitpunkt B liegt bei +45°, der Abtastzeitpunkt C bei -45° und der Abtastzeitpunkt D bei -135°. Bei korrekter Phasenlage zwischen dem in der horizontalen Austastlücke übertragenen Farbsynchronsignal und dem farbträgerfrequenten Farbartsignal sind die entsprechenden Amplitudenwerte einer demodulierten V-Komponente in aufeinanderfolgenden Zeilen betragsmäßig gleich.

Beim Vorliegen einer Phasenverschiebung um einen Winkel φ (Fig. 2(b), wobei ein Vektor zum Zeitpunkt A die Position eines Vektors zum Zeitpunkt A′ einnimmt, sind die Beträge der Spannungswerte der V-Komponente unterschiedlich. So ergibt sich beispielsweise für einen Abtastzeitpunkt D der Spannungswert $V_1$ und für einen phasenverschobenen Abtastzeitpunkt D′ der Spannungswert $V_2$. Die Spannungsdifferenz $\Delta V$ zwi-schen dem zuerst gemessenen Spannungswert $V_1$ und dem Spannungswert $V_2$ bestimmt die jeweilige Pha-senabweichung zwischen dem Farbsynchronsignal und dem Farbartsignal.

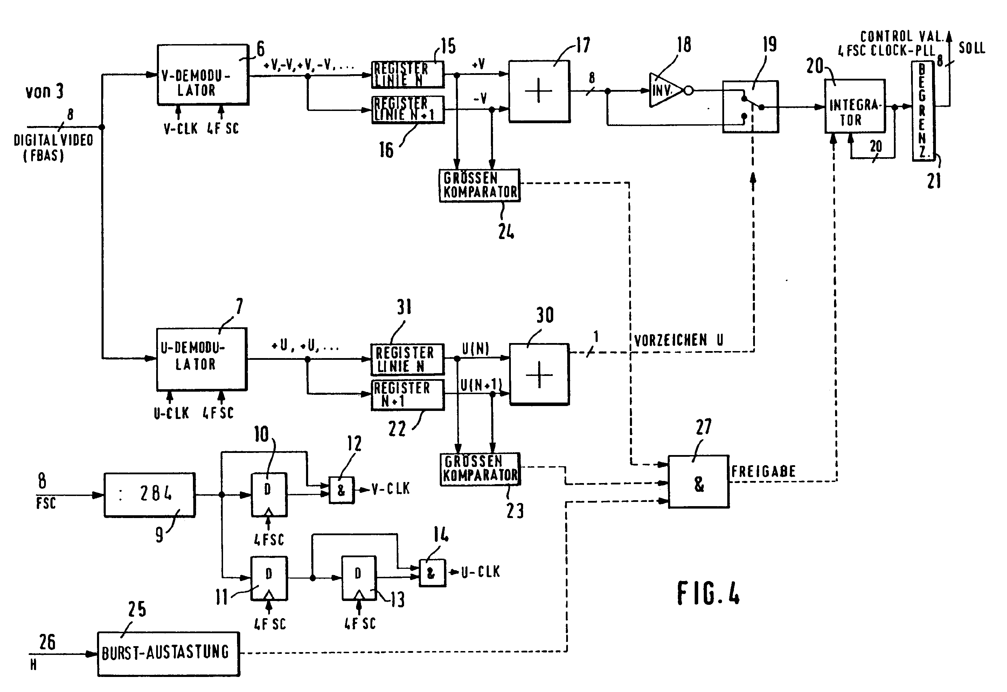

Vorteilhafterweise wird ein unverzögertes und ein um eine Zeilenperiode verzögertes demoduliertes Signal der V-Komponente addiert und nachfolgend für die Dauer mehrerer Zeilenperioden integriert. Ist das Ergebnis von Null verschieden, ist der spannungsgesteuerte Oszillator 4 entsprechend der festgestellten Phasenabweichung nachzuregeln. In der Fig. 1 ist eine entsprechende Schaltungsanordnung zur Ableitung dieses Korrektursignals mit 5 bezeichnet, die in der Fig. 4 ausführlicher dargestellt ist.

Wie eingangs erwähnt, entfallen auf eine Farbträgerperiode vier Abtastwerte. Unter der Voraussetzung, daß die Anfangsphasenlage des Taktsignals $4f_{sc}$ bei +135° liegt, ergibt sich unter Berücksichtigung des Viertelzeilenoffsets des PAL-Farbträgers und der V-Schaltphase für das Signalgemisch des PAL-Farbfernsehsignals eine bestimmte Sequenz, die in der Fig. 3 in Tabellenform dargestellt ist. Die Tabelle zeigt einen Ausschnitt von vier Zeilen n bis n+3, die im Abstand einer Taktperiode des Taktsignals $4f_{sc}$ unterteilt sind. Nach jeweils vier Abtasttakten wiederholt sich innerhalb der Zeilen die Abtastfolge. Dieses Verhalten wird genutzt, um eine Demodulation der V- und U-Komponenten des von dem A/D-Wandlers 2 abgegebenen digitalen PAL-Farbfernsehsignals durchzuführen. Dabei wird beispielsweise in der Zeile n von dem Abtastwert Y+(U+V) der um eine Abtastperiode verzögerte Abtastwert Y+(U-V) subtrahiert, so daß der Wert +2V entsteht. In entsprechender Weise wird dann in der folgenden Zeile n+1 von dem um eine Taktperiode des Taktsignals $4f_{sc}$ verzögerten Abtastwertes Y+(U-V) der folgende Abtastwert Y+(U+V) subtrahiert, um den Wert -2V zu erhalten. Es wird so für jede Zeile der Wert der geschalteten V-Komponente ermittelt, wobei das Raster vom Viertelzeilenoffset des Farbträgers in diagonaler Form von oben nach unten durchfahren wird.

In entsprechender Weise wird auch bei der Demodulation der U-Komponente vorgegangen, wobei die 90°-Phasenverschiebung des Farbträgers zwischen der V- und U-Komponente berücksichtigt wird. In der Zeile n wird somit von dem Abtastwert Y+(U-V) der folgende Abtastwert Y-(U+V) subtrahiert, um den Abtastwert +2U zu erhalten. In der folgenden Zeile n+1 werden die benachbarten Abtastwerte Y+(U+V) und Y-(U-V) subtrahiert, um ebenfalls den Wert +2U zu erhalten, wenn keine Phasenverschiebung zwischen dem Farbreferenzsignal und dem Farbartsignal vorliegt.

In der Fig. 4 bezeichnet der Block 6 einen Demodulator für die V-Komponente und der Block 7 einen Demodulator für die U-Komponente. Zur Ableitung entsprechender Taktsignale V-CLK und U-CLK für die beiden Demodulatoren wird ein bei 8 zugeführtes Farbträgersignal $f_{sc}$ mit einem Frequenzteiler 9 durch 284 in der Frequenz geteilt. Da auf eine Zeilenperiode bedingt durch den Viertelzeilenoffset 283,75 Schwingungsperioden des Farbträgersignals $f_{sc}$ entfallen, liegt somit am Ausgang des Teilers 9 ein horizontalfrequentes Impulssignal an, das gegenüber direkt folgenden Zeilen um jeweils 90° des Farbträgersignals phasenverschoben ist. Dies entspricht einer Verzögerung um eine Taktperiode des Taktsignals $4f_{sc}$. Ein am Ausgang des Teiles 9 abnehmbares horizontalfrequente Impulssignal wird parallel zwei D-Flip-Flops 10 und 11 zugeführt und in das Taktraster eines anliegenden Taktsignals $4f_{sc}$ gebracht. Mit einem Gatter 12 wird das von dem Teiler 9 abgegebene und von dem D-Flip-Flop 10 erhaltene Impulssignal zur Ableitung des Taktsignals V-CLK verknüpft. Dem D-Flip-Flop 11 ist ein weiteres D-Flip-Flop 13 nachgeschaltet, um die gewünschte 90°-Phasenverschiebung zwischen dem Taktsignal V-CLK und dem Taktsignal U-CLK herzustellen. Ein Gatter 14 dient zur logischen Verknüpfung der von den D-Flip-Flops 11 und 13 abgegebenen Impulssignale.

Die von dem Demodulator 6 in der zuvor beschriebenen Weise abgegebenen zeilenalternierenden Werte der V-Komponente werden in Registern 15 und 16 derart gespeichert, daß für eine nachfolgende Addition in einer Addierstufe 17 jeweils die Werte zweier benachbarter Zeilen zur Verfügung stehen. Ein am Ausgang der Addierstufe 17 abgreifbares V-Summensignal wird einmal direkt und ein anderes Mal durch Zwischenschaltung eines Inverters 18 invertiert zu einem gesteuerten Umschalter 19 weitergeleitet. Die Invertierung des V-Summensignals ist erforderlich, um die für eine Regelung erforderliche Stabilität des Regelkreises sicherzustellen. Das Steuersignal für diesen gesteuerten Umschalter 19 liefert das Vorzeichen eines Rechenergebnisses, welches ein Addierer 20 aus den ebenfalls in zwei Registern 21 und 22 enthaltenen benachbarten Zeilenwerten der U-Komponente abgibt. Dem gesteuerten Umschalter 19 folgt ein Integrator 20, der als Akkumulator aufgebaut ist und dem ein Begrenzer 21 zur Begrenzung des oberen und unteren Wertebereiches nachgeschaltet ist. Der am Ausgang des Begrenzers 21 vorliegende Wert beeinflußt als Soll-Wert die Phase des von dem spannungsgesteuerten Oszillator 4 abgegebenen Taktsignals $4f_{sc}$.

Der Integrator 20 ist so ausgelegt, daß eine Integration der anliegenden V-Summenwerte unterbleibt, wenn die zur Addition herangezogenen Werte der V- und U-Komponente einen bestimmten Mindestpegel unterschreiten, da im Bereich des Unbuntpunktes die Messung einer Phasenabweichung zwischen dem Farbsynchronsignal und dem Farbartsignal fehlerhaft werden könnte. Weiterhin unterbleibt die Integration der V-Komponente bei bestimmten Vorzeichenkombinationen der U- und V-Komponenten. Die entsprechende Bewertung der Signale der V- und U-Komponente erfolgt mit Komparatoren 23 und 24. Da auch das im Horizontalaustastintervall übertragene Farbsynchronsignal das Meßergebnis verfälscht, wird auch während dieser Zeit die Integration durch den Integrator 20 unterbrochen. Ein entsprechendes horizontalfrequentes Austastsignal wird in einer Stufe 25 von einem bei 26 zugeführten Horizontalsynchronsignal H abgeleitet. Eine Verknüpfung der in den Stufen 23, 24 und 25 generierten Signale erfolgt mit einer Verknüpfungsschaltung 27.

Das erfindungsgemäße Verfahren wurde in dem vorliegenden Ausführungsbeispiel anhand der Signalverarbeitung eines digitalen PAL-Farbfernsehsignals erläutert. Selbstverständlich ist das vorliegende Verfahren auch zur Signalverarbeitung analoger PAL-Farbfernsehsignale anwendbar. In diesem Fall wird das abgeleitete Korrektursignal als Sollwert einem Farbträgerregenerator zugeführt, um so die Phase des Farbträgersignals zu beeinflussen.

## Patentansprüche

1.  Verfahren zur Verarbeitung eines PAL-Farbfernsehsignals, bei welchem die geschaltete V-Komponente eines in dem PAL-Farbfernsehsignal enthaltenen Farbartsignals demoduliert wird,
    dadurch gekennzeichnet, daß durch eine Integration von Amplitudenwerten der demodulierten V-Komponente ein Regelsignal zur Korrektur von Phasenabweichungen zwischen einem in dem Farbfernsehsignal enthaltenen Farbsynchronsignal und dem Farbartsignal abgeleitet wird, daß die Amplitudenwerte der demodulierten V-Komponente einer Zeile n und einer Zeile n+1 addiert werden, wobei n eine ganze positive Zahl ist, und daß ein so erhaltenes V-Summensignal zur Ableitung des Regelsignals für die Dauer mehrerer Zeilenperioden integriert wird.

2.  Verfahren nach Anspruch 1,
    dadurch gekennzeichnet, daß Amplitudenwerte der demodulierten V-Komponente, die einen vorgegebenen Betrag unterschreiten, von der Integration ausgeschlossen werden.

3.  Verfahren nach Anspruch 1 oder 2,
    dadurch gekennzeichnet, daß Amplitudenwerte der demodulierten V-Komponente von der Integration ausgeschlossen werden, wenn sowohl Amplitudenwerte der demodulierten V-Komponente als auch Amplitudenwerte einer zugehörigen U-Komponente einen vorgegebenen Betrag unterschreiten.

**4.** Verfahren nach Anspruch 1 bis 3,
dadurch gekennzeichnet, daß innerhalb horizontaler Austastintervalle befindliche Amplitudenwerte der demodulierten V-Komponente bei der Integration nicht berücksichtigt werden.

**5.** Verfahren nach Anspruch 1 bis 4,
dadurch gekennzeichnet, daß die Amplitudenwerte der zugehörigen U-Komponente einer Zeile n und einer Zeile n+1 addiert werden, wobei n eine ganze positive Zahl ist, und daß abhängig von dem Vorzeichen und/oder Betrag des so erhaltenen U-Summensignals das V-Summensignal vor einer Integration invertiert wird.

**6.** Verfahren zur Verarbeitung eines mit einem 4-fachen der Farbträgerfrequenz abgetasteten digitalen PAL-Farbfernsehsignals nach Anspruch 1,
dadurch gekennzeichnet, daß zur Demodulation der V-Komponente das digitale PAL-Farbfernsehsignal durch Steuerung eines ersten Taktsignals (V-CLK) abgetastet wird, dessen Impulsfolgefrequenz einem 1/284-fachen eines Farbträgersignals ($f_{sc}$) entspricht, daß Binärwerte (+V, -V) des abgetasteten digitalen PAL-Farbfernsehsignals von zwei zeitlich benachbarten Zeilen addiert und die erhaltenen V-Summenwerte für die Dauer mehrerer Zeilenperioden integriert werden und
daß die Phasenlage eines zur A/D-Wandlung des digitalen PAL-Farbfernsehsignals verwendeten zweiten Taktsignals ($4f_{sc}$), welches mit dem 4-fachen der Farbträgerfrequenz verkoppelt ist, abhängig von dem ermittelten Integrationswert nachgeregelt wird.

**7.** Verfahren nach Anspruch 6,
dadurch gekennzeichnet, daß für eine Demodulation der U-Komponente das digitale PAL-Farbfernsehsignal durch Steuerung eines dritten Taktsignals (U-CLK) abgetastet wird, dessen Impulsfolgefrequenz der des ersten Taktsignals (V-CLK) entspricht, jedoch gegenüber diesen um eine Taktperiode des zweiten Taktsignals ($4f_{sc}$) verzögert ist,
daß Binärwerte (+U, -U) des abgetasteten digitalen PAL-Farbfernsehsignals von zwei zeitliche benachbarten Zeilen addiert werden und daß abhängig von einem höchstwertigen Bit des erhaltenen U-Summenwertes das V-Summensignal vor einer Integration invertiert wird.

**8.** Verfahren nach Anspruch 1,
dadurch gekennzeichnet, daß das Regelsignal amplitudenbegrenzt wird.

**9.** Verfahren nach Anspruch 6,
dadurch gekennzeichnet, daß der Wertebereich der durch die Integration ermittelten Binärwerte begrenzt wird.

**10.** Verfahren nach Anspruch 6,
dadurch gekennzeichnet, daß eine Integration der Binärwerte (+V, -V) mit einem rückgekoppelten Akkumulator durchgeführt wird, welcher aus einem Addierer mit einem auf einen Eingang des Addierers rückgekoppelten Register besteht.

**11.** Verfahren nach Anspruch 6 und 7,
dadurch gekennzeichnet, daß die Binärwerte der V- und U-Komponenten von jeweils zwei zeitlich benachbarten Zeilen mit vorgegebenen Binärwerten verglichen werden und daß bei einem Überschreiten der vorgegebenen Binärwerte nur während aktiver Zeilenperioden erhaltene V-Summenwerte zur Integration herangezogen werden.

**Claims**

**1.** A method of processing a PAL colour television signal, in which the switched V component of a chrominance signal in the PAL colour television signal is demodulated, characterized in that a control signal for correcting phase differences between a colour burst in the colour television signal and the chrominance signal is derived by integration of amplitude values of the demodulated V component, in that the amplitude values of the demodulated V component of a line n and a line n + 1 are added, in which n is a positive integer, and in that a V sum signal thus obtained for deriving the control signal is integrated during a plurality of line periods.

**2.** A method as claimed in Claim 1, characterized in that amplitude values of the demodulated V component falling below a predetermined amount are excluded from the integration.

**3.** A method as claimed in Claim 1 or 2, characterized in that amplitude values of the demodulated V component are excluded from the integration when amplitude values of the demodulated V component as well as amplitude values of an associated U component fall below a predetermined amount.

**4.** A method as claimed in Claims 1 to 3, characterized in that amplitude values of the demodulated V component within horizontal blanking intervals are not taken into account in the integration.

**5.** A method as claimed in Claims 1 to 4, characterized in that the amplitude values of the associated U component of a line n and a line n + 1 are added, in which n is a positive integer, and in that, dependent on the sign and/or amount of the U sum signal thus obtained, the V sum signal is inverted before integration.

**6.** A method of processing a digital PAL colour television signal sampled at 4 times the chrominance subcarrier frequency as claimed in Claim 1, characterized in that for demodulation of the V component, the digital PAL colour television signal is sampled by controlling a first clock signal (V-CLK) whose pulse repetition frequency is 1/284 part of a chrominance subcarrier signal ($f_{sc}$), in that binary values (+V,-V) of the sampled digital PAL colour television signal of two temporally adjacent lines are added and the obtained V sum values are integrated during a plurality of line periods, and in that the phase position of a second clock signal ($4f_{sc}$) used for A/D conversion of the digital PAL colour television signal is readjusted in dependence upon the determined integration value, said clock signal being coupled to the 4-fold value of the chrominance subcarrier frequency.

**7.** A method as claimed in Claim 6, characterized in that for demodulation of the U component, the digital PAL colour television signal is sampled by controlling a third clock signal (U-CLK) whose pulse repetition frequency corresponds to that of the first clock signal (V-CLK) but is delayed with respect to said signal by a clock period of the second clock signal ($4f_{sc}$), in that binary values (+U,-U) of the sampled digital PAL colour television signal of two temporally adjacent lines are added and in that the V sum signal is inverted before integration in dependence upon a most significant bit of the obtained U sum value.

**8.** A method as claimed in Claim 1, characterized in that the control signal is amplitude-limited.

**9.** A method as claimed in Claim 6, characterized in that the range of values of the binary values determined by means of the integration is limited.

**10.** A method as claimed in Claim 6, characterized in that an integration of the binary values (+V,-V) is performed with a feedback accumulator which consists of an adder having a register fed back to an input of the adder.

**11.** A method as claimed in Claims 6 and 7, characterized in that the binary values of the V and U components of two temporally adjacent lines are compared with predetermined binary values, and in that only V sum values obtained during active line periods are used for integration when the predetermined binary values are exceeded.

**Revendications**

**1.** Procédé de traitement d'un signal de télévision en couleurs PAL, dans lequel la composante V d'un signal de chrominance contenu dans le signal de télévision en couleurs PAL est démodulée, caractérisé en ce que, par une intégration des valeurs d'amplitude de la composante V démodulée, on déduit un signal de réglage pour la correction des écarts de phase entre un signal de synchronisation couleur contenu dans le signal de télévision en couleurs et le signal de chrominance, que les valeurs d'amplitude de la composante V démodulée d'une ligne n et d'une ligne n + 1 sont additionnées, n étant un nombre entier positif, et qu'un signal de somme de V ainsi obtenu est intégré sur la durée de plusieurs périodes de lignes pour déduire le signal de réglage.

**2.** Procédé selon la revendication 1, caractérisé en ce que les valeurs d'amplitude de la composante V démodulée, qui se trouvent en dessous d'un niveau prédéterminé, sont exclues de l'intégration.

3. Procédé selon la revendication 1 ou 2, caractérisé en ce que les valeurs d'amplitude de la composante V démodulée sont exclues de l'intégration lorsque les valeurs d'amplitude de la composante V démodulée ainsi que les valeurs d'amplitude d'une composante U associée sont en dessous d'un niveau prédéterminé.

4. Procédé selon les revendications 1 à 3, caractérisé en ce qu'on ne tient pas compte des valeurs d'amplitude de la composante V démodulée qui se trouvent dans l'intervalle de suppression de ligne lors de l'intégration.

5. Procédé selon les revendications 1 à 4, caractérisé en que les valeurs d'amplitude de la composante U associée d'une ligne n et d'une ligne n + 1 sont additionnées, n étant un nombre entier positif, et, en fonction du signe et/ou de la valeur absolue du signal de somme de U ainsi obtenu, le signal de somme de V est inversé avant une intégration.

6. Procédé de traitement d'un signal de télévision en couleurs PAL numérique échantillonné à une fréquence quadruple de la fréquence de la sous-porteuse de chrominance selon la revendication 1, caractérisé en ce que, pour démoduler la composante V, le signal de télévision en couleurs PAL numérique est échantillonné par commande d'un premier signal de cadence (V-CLK), dont la fréquence de la séquence d'impulsions correspond à 1/284 d'un signal de sous-porteuse de chrominance ($f_{sc}$), des valeurs binaires (+V, -V) du signal de télévision en couleurs PAL numérique échantillonné de deux lignes voisines dans le temps sont additionnées et les valeurs de somme de V obtenues sont intégrées sur la durée de plusieurs périodes de lignes, et que la position de phase d'un deuxième signal de cadence ($4f_{sc}$) utilisé pour la conversion A/D du signal de télévision en couleurs PAL numérique, qui est couplé avec une fréquence quadruple de la sous-porteuse de chrominance, est réglée ensuite en fonction de la valeur d'intégration obtenue.

7. Procédé selon la revendication 6, caractérisé en ce que, pour une démodulation de la composante U, le signal de télévision en couleurs PAL numérique est échantillonné par commande d'un troisième signal de cadence (U-CLK), dont la fréquence de la séquence d'impulsions correspond à celle du premier signal de cadence (V-CLK), mais est retardée vis-à-vis de celui-ci d'une période du deuxième signal de cadence ($4f_{sc}$), que des valeurs binaires (+U, -U) du signal de télévision en couleurs PAL numérique échantillonné de deux lignes voisines dans le temps sont additionnées et que le signal de somme de V est inversé avant une intégration en fonction d'un bit très significatif de la valeur de somme de U reçue.

8. Procédé selon la revendication 1, caractérisé en ce que le signal de réglage est limité en amplitude.

9. Procédé selon la revendication 6, caractérisé en ce que la plage des valeurs binaires obtenues par l'intégration est limitée.

10. Procédé selon la revendication 6, caractérisé en ce qu'une intégration des valeurs binaires (+V, -V) est réalisée à l'aide d'un accumulateur couplé en retour, qui est constitué d'un additionneur avec un registre couplé en retour à une entrée de l'additionneur.

11. Procédé selon la revendication 6 ou 7, caractérisé en ce que les valeurs binaires des composantes V et U de deux lignes respectivement voisines dans le temps sont comparées à des valeurs binaires prédéterminées et que, lorsque les valeurs binaires prédéterminées sont supérieures, seules les valeurs de somme de V reçues au cours de périodes de lignes actives sont utilisées pour l'intégration.

FIG. 1

( a )          ( b )

FIG. 2

| | | | | | | |
|---|---|---|---|---|---|---|
| Y+(U+V) | Y+(U−V) | Y−(U+V) | Y−(U−V) | Y+(U+V) | Y+(U−V) | Zeile  n |
| Y−(U+V) | Y+(U−V) | Y+(U+V) | Y−(U−V) | Y−(U+V) | Y+(U−V) | Zeile  n+1 |
| Y−(U+V) | Y−(U−V) | Y+(U+V) | Y+(U−V) | Y−(U+V) | Y−(U−V) | Zeile  n+2 |
| Y+(U+V) | Y−(U−V) | Y−(U+V) | Y+(U−V) | Y+(U+V) | Y−(U−V) | Zeile  n+3 |

FIG. 3

FIG.4